# EUROPÄISCHE PATENTSCHRIFT

(11) **EP 1 574 119 B1**
(45) Veröffentlichungstag und Bekanntmachung des Hinweises auf die Patenterteilung: **02.05.2007**
(21) Anmeldenummer: 04023270.4
(22) Anmeldetag: 30.09.2004
(51) Int. Cl.: A01B 33/02, A01G 23/06

(54) **Handgeführtes Bodenbereichbearbeitungsgerät und Verfahren zum Bearbeiten eines Bodenbereiches**
Hand guided soil working apparatus and method
Procédé et appareil guidé à main pour le travail du sol

(30) Priorität: 09.03.2004 DE 102004011761; 24.06.2004 DE 102004030649; 23.07.2004 US 590506 P; 17.08.2004 DE 102004039948
(43) Veröffentlichungstag der Anmeldung: 14.09.2005
(73) Patentinhaber: Müllers & Backhaus GmbH & Co. KG, 41844 Wegberg-Arsbeck (DE)
(72) Erfinder: Backhaus, Josef, 41844 Wegberg (DE)
(74) Vertreter: Castell, Klaus

(56) Entgegenhaltungen:
- WO-A-93/03950
- DE-U- 9 300 531
- US-A- 3 123 112
- US-A- 3 336 958
- US-A- 6 003 570

## Beschreibung

Die Erfindung betrifft zum einen ein handgeführtes Bodenbereichbearbeitungsgerät mit wenigstens einem Motorantrieb und mit einem an einem Fahrwerk angeordneten Chassis und zum anderen ein handgeführtes Bodenbereichbearbeitungsgerät mit wenigstens einem Motorantrieb und mit einem an einem Fahrwerk angeordneten Chassis, bei welchem das Fahrwerk wenigstens zwei Räder aufweist. Außerdem betrifft die Erfindung ein Verfahren zum Bearbeiten eines Bodenbereiches mit einem handgeführten Bodenbereichbearbeitungsgerät.

Handgeführte Bodenbereichbearbeitungsgeräte sind aus dem Stand der Technik hinlänglich bekannt und verfügen meistens über einen Antrieb, mit welchem das handgeführte Bodenbereichbearbeitungsgerät in eine Bearbeitungsrichtung angetrieben wird. Die handgeführten Bodenbereichbearbeitungsgeräte zeichnen sich darüber hinaus dadurch aus, dass sie von einem Bediener mittels eines Lenkgestänges gelenkt bzw. geführt und bedient werden (siehe z.B. DE-U-9300531).

Beispielsweise verfügt ein derartiges handgeführtes Bodenbereichbearbeitungsgerät über ein Werkzeug, mit welchem Baumstümpfe im Bereich des Bodens weggefräst werden. Hierbei spricht man von sogenannten Stubbenfräsen, mit welchen Baumstubben entsprechend bearbeitet werden.

Es ist Aufgabe vorliegender Erfindung gattungsgemäße handgeführte Bodenbereichbearbeitungsgeräte weiterzuentwickeln, sodass deren Handhabung wesentlich erleichtert ist.

Die Aufgabe der Erfindung wird von einem handgeführten Bodenbereichbearbeitungsgerät wie beansprucht gelöst.

Unter dem Begriff "handgeführtes Bodenbereichbearbeitungsgerät" versteht man im Sinne der Erfindung eine Vorrichtung, die im Wesentlichen mittels einer starren Lenkeinrichtung von einem Bedienpersonal im Wesentlichen durch Muskelkraft gelenkt bzw. bedient wird und gegebenenfalls motorisch angetrieben ist. Bei dem vorliegenden Bodenbereichbearbeitungsgerät wird das Chassis gegenüber dem Fahrwerk vorzugsweise manuell, das heißt mittels Muskelkraft eines Bedieners, bewegt beziehungsweise gedreht. Hierbei befindet sich der Bediener während des eigentlichen Einsatzes des Bodenbereichbearbeitungsgerätes hinter einer Fahrwerksachse und zwischen zwei Rädern der Fahrwerksachse. Durch eine derartige Positionierung ist das Chassis gegenüber dem Fahrwerk manuell besonders leichtgängig von dem Bediener zu verstellen.

Mit dem Standort "hinter der Fahrwerksachse" nimmt der Bediener vorliegend gegenüber dem handgeführten Bodenbereichbearbeitungsgerät eine Position ein, in welcher er in Bezug auf die Fahrwerksachse an der dem Bearbeitungswerkzeug abgewandten Seite der Fahrwerkachse und zwischen zwei Rädern der Fahrwerksachse positioniert ist.

Mit dem Begriff "Fahrwerk" wird vorliegend eine Einrichtung beschrieben, mittels welcher sich das handgeführte Bodenbereichbearbeitungsgerät relativ zu einem Untergrund bewegen kann. Vorzugsweise weist ein solches Fahrwerk wenigstens eine Achse mit zwei Rädern auf. Durch ein derart einfach gestaltetes Fahrwerk baut das vorliegende handgeführte Bodenbereichbearbeitungsgerät relativ leicht und ist darüber hinaus besonders einfach zu handhaben. Es versteht sich, dass das handgeführte Bodenbereichbearbeitungsgerät auch mehr als eine Achse und mehr als zwei Räder aufweisen kann. Auch können anstelle der Räder andere Einrichtungen vorgesehen sein, die ein Fortbewegen des handgeführten Bodenbereichbearbeitungsgerätes ermöglichen.

Der Begriff "Chassis" umschreibt vorliegend im Wesentlichen den sonstigen Aufbau des handgeführten Bodenbereichbearbeitungsgerätes. An dem Chassis ist beispielsweise auch eine Werkzeugaufnahme angeordnet, an welcher Bearbeitungswerkzeuge des handgeführten Bodenbereichbearbeitungsgerätes sicher geführt sind. In einer besonders einfachen Ausführungsvariante kann das Chassis lediglich aus einer Werkzeugaufnahme bestehen. In einem solch einfachen Fall wären Antriebseinrichtungen für das Bodenbereichsbearbeitungsgerät, insbesondere für die Bearbeitungswerkzeuge des Bodenbereichsbearbeitungsgerätes, vorteilhafter Weise Bestandteile des Fahrwerks. Hierdurch baut das Chassis insgesamt sehr leicht und kann besonders einfach durch Muskelkraft bewegt, das heißt horizontal gegenüber dem Fahrwerk hin und her geschwenkt, werden.

Dadurch, dass das Chassis drehbar beziehungsweise schwenkbar gegenüber dem Fahrwerk gelagert ist, wird das Bearbeiten eines dem Bodenbereichbearbeitungsgerät vorgelagerten Bodenbereichs einfacher, da das handgeführte Gerät zum Bearbeiten des Bodenbereichs in der Regel temporär in einem stationären Bearbeitungsmodus aufgestellt wird, um dann den vorgelagerten Bodenbereich zu bearbeiten. In diesem stationären Bearbeitungsmodus ist das Fahrwerk des handgeführten Bodenbereichbearbeitungsgerätes vorzugsweise blockiert, sodass das handgeführte Bodenbereichbearbeitungsgerät einen besonders festen Stand aufweist. Vorteilhaft ist hierbei das gegenüber dem Fahrwerk drehbare Chassis, an welchem auch ein Bearbeitungswerkzeug angeordnet ist. Durch die Drehmöglichkeit des Chassis ist der Arbeitsbereich des Werkzeuges vergrößert, da das Werkzeug mit dem Chassis geschwenkt wird. Somit ist es möglich, eine größere Fläche an zu bearbeitendem Boden zu erreichen, ohne einen Standortwechsel des handgeführten Bodenbereichbearbeitungsgerätes vornehmen zu müssen.

Um mit dem vorliegenden handgeführten Bodenbereichbearbeitungsgerät einen Baumstubben zu fräsen, ist es vorteilhaft, wenn das handgeführte Bodenbereichbearbeitungsgerät eine Stubbenfräse aufweist.

Gattungsgemäße Stubbenfräsen weisen oft ein Eigengewicht von mindestens 95 kg bis 240 kg auf. Dieses Eigengewicht hängt im Wesentlichen von der Motorleistung der Stubbenfräse und der damit verbundenen Fräsleistung der Stubbenfräse ab. Bekannte Stubbenfräsen werden im Gelände sowohl von Hand als auch mittels hydraulischer oder elektrischer Fahrantriebe bewegt. Beim eigentlichen Bearbeiten eines Baumstubbens wird die Stubbenfräse vor dem Baumstubben in eine geeignete Bearbeitungsposition gefahren. In dieser Bearbeitungsposition wird bisher ein Rad der Stubbenfräse festgestellt. Beim Fräsen des Baumstubbens muss demnach die gesamte Maschine von einem Bedienpersonal per Muskelkraft um eine Vertikalachse dieses festgestellten Rades bewegt werden. Je nachdem in welchem Zustand sich der Untergrund des Geländes befindet, gräbt sich durch die Drehbewegung des Rades um die Vertikalachse das feststehende Rad der Stubbenfräse mehr oder weniger schnell zunehmend tiefer in den Untergrund ein. Hierdurch wird die Bedienung der Stubbenfräse zunehmend schwerer, wodurch die gesamte Arbeitsleistung schnell erheblich abnimmt.

Durch den Fräsvorgang an dem Baumstubben wird gleichzeitig vor den Rädern der Stubbenfräse ein zunehmend größeres Materialvolumen aus abgefrästen Baumwurzelstücken und beim Fräsen erfasster Erde aufgehäuft. Auch hierdurch muss das Bedienpersonal bei einem fortschreitenden Fräsvorgang immer mehr Muskelkraft aufwenden, um die Stubbenfräse durch bzw. über das aufgeschüttete Material bewegen zu können.

Darüber hinaus wird durch diese Arbeitsweise ein zuvor ebenes Gelände stark zerklüftet, wodurch die Fräsarbeiten zusätzlich erschwert werden. Insbesondere bei größeren Baumstubben, die zwangsläufig tiefer ausgefräst werden müssen, stellt dies mit bisherigen Stubbenfräsen einen erheblichen Nachteil dar, da das Bedienpersonal mit den Rädern der Stubbenfräse in Bereiche gelangt, die zuvor ausgefräst wurden.

Derartige Nachteile, werden mit dem vorstehend erläuterten Bodenbereichbearbeitungsgerät in Gestalt einer Stubbenfräse weitestgehend verhindert, da zum horizontalen Schwenken eines Fräswerkzeuges das vorliegende handgeführte Bodenbereichbearbeitungsgerät nicht um ein feststehendes Rad gedreht wird. Vielmehr wird das Fräswerkzeug durch Schwenken des Chassis beziehungsweise durch Schwenken der Werkzeugaufnahme gegenüber dem Baumstubben hin und her bewegt. Die Schwenkbewegung des Chassis oder der Werkzeugaufnahme wird besonders einfach durch Muskelkraft eines Bedieners initiiert und ist baulich besonders einfach mittels der Dreheinrichtung zwischen dem Chassis oder der Werkzeugaufnahme und dem Fahrwerk des handgeführten Bodenbereichbearbeitungsgerätes realisiert.

Somit wird durch die vorliegende Stubbenfräse auf baulich besonders einfache Art und Weise nicht nur ein vertikaler Schwenkbereich des Bearbeitungswerkzeuges sondern auch ein horizontaler Schwenkbereich des Bearbeitungswerkzeuges bereit gestellt, ohne einen Standortwechsel der vorliegenden Stubbenfräse beziehungsweise einen Standortwechsel des Fahrwerks des handgeführten Bodenbereichbearbeitungsgerätes vornehmen zu müssen. Es versteht sich, dass anstatt der Muskelkraft eines Bedienpersonals als Drehantrieb unterstützend beispielsweise auch hydraulische oder elektrische Drehantriebe eingesetzt werden können, die beispielsweise mittels eines Exzentergetriebes eine Drehbewegung in eine translatorische Bewegung umsetzen. Mittels der hydraulischen oder elektrischen Drehantriebe kann das Fräswerkzeug durch das Bedienpersonal wesentlich leichter hin und her geschwenkt werden, wobei die Schwenkbewegung letztendlich über ein Bedienteil von dem Bediener kontrolliert wird, mit welchem auch Lenkkräfte im Fahrbetrieb auf das handgeführte Bodenbereichbearbeitungsgerät ausgeübt werden. Hierdurch unterscheidet sich vorliegendes handgeführtes Bodenbereichbearbeitungsgerät sowohl von gattungsgemäßen handgeführten Stubbenfräsen als auch von größeren massiven Baumstumpffräsen, die auf Grund ihrer Größe und Schwere nicht mehr nur allein durch Muskelkraft bewegt werden, sondern motorisch angetrieben und geführt werden müssen.

Die Aufgabe der Erfindung wird in diesem Zusammenhang auch von einem Verfahren zum Bearbeiten eines Bodenbereichs mit einem handgeführten Bodenbereichbearbeitungsgerät wie beansprucht gelöst.

Es versteht sich weiterhin, dass vorliegende Dreheinrichtung durch eine Vielzahl an technischen Einrichtungen realisiert sein kann. Die Dreheinrichtung stellt im Sinne der Erfindung ein Mittel zum Übertragen von Bearbeitungskräften zwischen dem Chassis oder einer Werkzeugaufnahme und einem Fahrwerk des handgeführten Bodenbereichbearbeitungsgerätes sowie ein Mittel zum Übertragen von Lenkkräften zwischen dem Chassis oder der Werkzeugaufnahme und dem Fahrwerk des handgeführten Bodenbereichbearbeitungsgerätes dar. Beispielsweise weist die Dreheinrichtung ein Gleitlager auf, wodurch das Chassis drehbar an dem Fahrwerk befestigt ist. Zum Zentrieren des Gleitlagers weist die Dreheinrichtung vorteilhafter Weise eine Welle-Nabe-Verbindung auf, wobei beispielsweise an dem Fahrwerk eine Nabe und an dem Chassis eine Welle beziehungsweise ein Wellenzapfen angeordnet ist, der mit der Nabe des Fahrwerks kommuniziert. Um die Gefahr einer Verschmutzung des Gleitlagers zu verringern, ist es vorteilhaft, wenn das Gleitlager von der Umgebung abgekapselt ist. Gerade beim Fräsen von Baumstubben ist dies besonders vorteilhaft.

Eine bevorzugte Ausführungsvariante sieht vor, dass die Dreheinrichtung einen Kugeldrehkranz aufweist. Mittels des Kugeldrehkranzes ist das Chassis drehbar und besonders stabil an dem Fahrwerk gelagert. Somit können selbst relativ große Kräfte, welche beim Arbeiten auf das Bearbeitungswerkzeug und damit auch auf das Chassis wirken, von dem Chassis über die Dreheinrichtung an das Fahrwerk geleitet werden.

Da beim Einsatz des vorliegenden handgeführten Bodenbereichbearbeitungsgerätes nahezu immer Dreck und Staub aufgewirbelt wird, ist es vorteilhaft, wenn der Kugeldrehkranz von der Umgebung abgekapselt ist. Durch die Verwendung von gekapselten Kugeldrehkränzen verringert sich zum einen die Gefahr, dass die Funktionsfähigkeit der Dreheinrichtung durch Verschmutzung negativ beeinträchtigt wird und zum anderen erhöht sich hierdurch die Lebensdauer der Dreheinrichtung. Eine derartige Kapslung ist nicht nur hinsichtlich eines Kugeldrehkranzes vorteilhaft sondern auch hinsichtlich jeder anderen Dreheinrichtung, da durch das Abkapseln zueinander bewegte Teile gut geschützt sind.

Es wurde gefunden, dass die Dreheinrichtung genügend stabil ausgelegt ist, um selbst große Bearbeitungskräfte aufnehmen zu können, wenn die Dreheinrichtung einen Durchmesser von mehr 100 mm, vorzugsweise von mehr als 150 mm, aufweist.

Damit das vorliegende handgeführte Bodenbereichbearbeitungsgerät nicht zu massiv und damit zu schwer konstruiert ist, ist es vorteilhaft, wenn die Dreheinrichtung einen Durchmesser von weniger als 500 mm, vorzugsweise von weniger als 250 mm, aufweist.

Eine ausreichend stabile und dennoch leichte Konstruktion ergibt sich, wenn die Dreheinrichtung einen Durchmesser von etwa 200 mm aufweist.

Eine vorteilhafte Schwenkbewegung des Bearbeitungswerkzeuges in einer im Wesentlichen horizontal angeordneten Ebene wird baulich besonders einfach erzielt, da das Chassis und das Fahrwerk um eine in etwa vertikal angeordnete Drehachse drehbar miteinander verbunden sind.

Damit das handgeführte Bodenbereichbearbeitungsgerät während der Fahrt zu einem oder von einem Einsatzort gut zu handhaben ist und dementsprechend gute Fahreigenschaften aufweist, ist es vorteilhaft, wenn die Dreheinrichtung Mittel zum Festlegen der Drehfunktion aufweist. Über die Mittel zum Festlegen kann die Dreheinrichtung im Fahrbetrieb des handgeführten Bodenbereichbearbeitungsgerätes bei Bedarf derart blockiert werden, dass das Chassis gegen eine Verdrehung gegenüber dem Fahrwerk gesperrt ist. Hierdurch wird der Transport des handgeführten Bodenbereichbearbeitungsgerätes wesentlich erleichtert.

Eine weitere Vereinfachung der Handhabung des handgeführten Bodenbereichbearbeitungsgerätes, insbesondere während der Fahrt zu einem oder von einem Einsatzort, wird erzielt, wenn an der Werkzeugaufnahme des handgeführten Bodenbereichbearbeitungsgerätes, vorzugsweise im Bereich des Werkzeuges, ein Hilfsrad angeordnet ist. Mittels des Hilfsrades kann insbesondere die Werkzeugaufnahme besonders einfach gegenüber einem Bodenbereich geführt werden. Hierzu ist das Hilfsrad vorzugsweise 360° um eine in etwa vertikal verlaufende Drehachse drehbar an der Werkzeugaufnahme gelagert. Mittels des Hilfsrades ist die handgeführte Baumwurzelfräse insbesondere im Fahrbetrieb besonders gut zu handhaben und zu führen, da sie nunmehr mit drei Rädern gegenüber einem Untergrund abgestützt ist. Ein "Dreirad" ist wesentlich einfacher gegenüber einem Untergrund zu bewegen als ein einachsiges Gefährt mit lediglich zwei Rädern, welches während eines Standortwechsels ständig um die eine Achse manuell ausbalanciert werden muss. Damit das Hilfsrad im Arbeitsbetrieb, also beispielsweise während des Fräsens, des handgeführten Bodenbereichbearbeitungsgerätes nicht stört, ist das Hilfsrad vorzugsweise klappbar an der Werkzeugaufnahme angeordnet. Hierdurch ist es möglich, das Hilfsrad bei Bedarf beispielsweise um eine in etwa vertikal verlaufende Drehachse von dem zu bearbeitenden Bodenbereich wegzuklappen, sodass ein Fräswerkzeug ungehindert an das zu fräsende Objekt geführt werden kann.

Um die Bedienung des handgeführten Bodenbereichbearbeitungsgerätes weiter zu vereinfachen, ist es vorteilhaft, wenn das handgeführte Bodenbereichbearbeitungsgerät Koordinationsmittel aufweist, welche Mittel zum Festlegen für die Dreheinrichtung, vorzugsweise automatisch, deaktivieren und welche eine Bremseinrichtung des Fahrwerkes, vorzugsweise automatisch, aktivieren, oder umgekehrt. Somit ist sichergestellt, dass beispielsweise bei einer deaktivierten Dreheinrichtung die Fahrfunktion des Fahrwerkes aktiviert wird, sodass ein Transport des handgeführten Bodenbereichbearbeitungsgerätes von einem Ort zu einem anderen Ort besonders leicht möglich ist. Ist die Dreheinrichtung dagegen aktiviert, wird die Fahrfunktion des Fahrwerkes mittels der Koordinationsmittel zumindest eingeschränkt oder ganz deaktiviert, sodass das handgeführte Bodenbereichbearbeitungsgerät gegenüber einem Boden einen festen Stand aufweist und das Chassis mitsamt seinem Bearbeitungswerkzeug verschwenkt werden kann. Ist die Fahrfunktion des Fahrwerks mittels der Koordinationsmittel lediglich eingeschränkt, kann das handgeführte Bodenbereichbearbeitungsgerät mit Hilfe eines Motorantriebs nur noch eingeschränkt und langsam vor und/oder zurück bewegt werden.

Die Aufgabe der Erfindung wird darüber hinaus wie beansprucht von einem handgeführten Bodenbereichbearbeitungsgerät mit wenigstens einem Motorantrieb und mit einem an einem Fahrwerk fest angeordneten Chassis gelöst, bei welchem das Fahrwerk wenigstens zwei Räder und eine Antriebseinrichtung mit ersten Antriebsmitteln zum Antreiben eines ersten Rades und mit zweiten Antriebsmitteln zum Antreiben eines zweiten Rades aufweist. Durch das erste und das zweite Antriebsmittel sind die beiden Räder des Fahrwerkes unabhängig voneinander angetrieben, sodass beispielsweise das erste Rad in eine erste Richtung dreht, während das zweite Rad in eine der ersten Drehrichtung entgegengesetzten zweiten Drehrichtung dreht. Durch die beiden Antriebsmittel ist auf baulich besonders einfache Art und Weise erreicht, dass das handgeführte Bodenbereichbearbeitungsgerät um eine in etwa vertikale Bearbeitungsgeräteachse, genauer gesagt beispielsweise um die vertikale Mittelachse des Fahrwerks, gedreht werden kann, sodass hierdurch ein an dem Chassis befestigtes Bearbeitungswerkzeug in einer in etwa horizontal verlaufenden Ebene, wie etwa einem zu bearbeitenden Boden, geschwenkt wird, obwohl es mit dem Fahrwerk eine feste Verbindung aufweist.

Vorteilhafter Weise kann das handgeführte Bodenbereichbearbeitungsgerät Geschwindigkeitsjustiermittel aufweisen, über welche die Antriebsgeschwindigkeit der Räder einstellbar ist. Hierdurch wird besonders einfach die Fahrgeschwindigkeit des handgeführten Bodenbereichbearbeitungsgerätes eingestellt. Dies betrifft in erster Linie eine Vorwärtsbewegung des handgeführten Bodenbereichbearbeitungsgerätes, jedoch kann je nach Ausführungsvariante auch die Geschwindigkeit einer Rückfahrbewegung durch die Geschwindigkeitsjustiermittel eingestellt werden. Handelt es sich bei den Antriebsmitteln zum Antreiben der Räder um Ölmotoren, wird die Geschwindigkeitsveränderung der Räder vorteilhafter Weise mittels des Ölflusses durch die Antriebsmittel eingestellt. Somit lassen sich verschiedene Fahrgeschwindigkeiten des handgeführten Bodenbereichbearbeitungsgerätes baulich auf besonders einfache Art und Weise einstellen.

Die vorstehend beschriebene Antriebseinrichtung mit einzelnen Antriebsmitteln ist auf besonders einfache Art und Weise realisiert, wenn die Antriebseinrichtung wenigstens einen Hydraulikmotor aufweist. Es ist möglich, den Hydraulikmotor mit den Rädern des Fahrwerkes derart zu verschalten, dass jedes Rad einzeln und in verschiedenen Drehrichtungen angetrieben ist. Je nach Ausführungsvariante können auch separate Hydraulikmotoren für jedes Rad vorgesehen werden.

Ein Hydraulikmotor eignet sich insbesondere auch dazu, eine hydraulische Bremse für das handgeführte Bodenbereichbearbeitungsgerät bereit zu stellen. Mittels der hydraulischen Bremse wird die Handhabung des handgeführten Bodenbereichsbearbeitungsgerätes wesentlich erleichtert, insbesondere auch in einem schwer zu erschließenden Gelände.

Es versteht sich, dass das handgeführte Bodenbereichbearbeitungsgerät kumulativ oder alternativ beispielsweise auch mechanisch arbeitende Bremsen aufweisen kann.

Es versteht sich, dass anstelle der beiden einzeln angetriebenen Räder auch zwei Räder auf einer gemeinsamen Achse vorgesehen werden können, wobei die gemeinsame Achse vorzugsweise über ein Differenzial verfügt, über welches die beiden Räder unterschiedlich angesteuert und angetrieben werden können.

Soll der Drehpunkt des vorliegenden handgeführten Bodenbereichbearbeitungsgerätes nicht um die vertikale Mittelachse des Fahrwerkes erfolgen, sondern um eine vertikale Mittelachse eines der Räder des Fahrwerkes, ist es vorteilhaft, wenn das handgeführte Bodenbereichbearbeitungsgerät eine Feststelleinrichtung mit erstem Feststellmittel zum Feststellen eines ersten Rades und mit zweiten Feststellmitteln zum Feststellen eines zweiten Rades aufweist.

In einer besonders einfachen Ausführungsvariante können die Feststellmittel auch durch einen oder mehrere Antriebsmittel oder insbesondere durch einen oder mehrere Hydraulikmotoren realisiert sein.

Aufgrund der ersten und zweiten Feststellmittel können die einzelnen Räder des Fahrwerks besonders betriebssicher blockiert werden. Je nachdem, um welches Rad sich das handgeführte Bodenbereichbearbeitungsgerät drehen soll, wird entweder das erste Rad mit dem ersten Feststellmittel blockiert während das zweite Rad mit dem zweiten Antriebsmittel angetrieben wird, sodass sich hierdurch das handgeführte Bodenbereichbearbeitungsgerät um die vertikale Mittelachse des ersten blockierten Rades dreht.

Um die Blockierfunktion eines Rades und die Antriebsfunktion eines dementsprechend nicht blockierten Rades besonders einfach zu gestalten, ist es vorteilhaft, wenn das handgeführte Bodenbereichbearbeitungsgerät Schaltmittel zum Aktivieren und/oder Deaktivieren von Feststellmitteln und Antriebsmitteln aufweist. Durch derartige Schaltmittel wird beispielsweise zuerst das erste Feststellmittel des vorliegenden Bodenbereichbearbeitungsgerätes aktiviert und dementsprechend, gegebenenfalls automatisch, das zweite Antriebsmittel ebenfalls aktiviert. Somit ist die Drehfunktion des ersten Rades durch das erste Feststellmittel blockiert, gleichzeitig wird das zweite Rad durch das zweite Antriebsmittel angetrieben. Demzufolge dreht das handgeführte Bodenbereichbearbeitungsgerät sich um in etwa eine vertikale Drehachse des ersten blockierten Rades.

Um die Betriebssicherheit des handgeführten Bodenbereichbearbeitungsgerätes weiter zu erhöhen, ist es vorteilhaft, wenn das handgeführte Bodenbereichbearbeitungsgerät eine Werkzeugantriebskupplung, insbesondere eine Magnetkupplung, zum Koppeln und Entkoppeln des Werkzeuges von einem Werkzeugantrieb aufweist. Durch eine derartige Werkzeugantriebskupplung ist ein Ein- und Ausschalten des Werkzeuges unabhängig von sonstigen Funktionen des Bodenbereichbearbeitungsgerätes möglich. Insbesondere ist durch eine derartige Werkzeugantriebskupplung auf baulich besonders einfache Art und Weise eine Notausfunktion des Werkzeugantriebes realisiert, sodass beispielsweise eine Fräse von einem Antriebsmotor besonders schnell entkoppelt werden kann. Hierdurch ist die Unfallgefahr stark verringert. Eine derartige Kupplung kann durch eine Vielzahl an technischen Einrichtungen realisiert sein, wie etwa eine Fliehkraftkupplung. Als besonders robust und zuverlässig hat sich im Zusammenhang mit dem vorliegenden handgeführten Bodenbereichbearbeitungsgerät der Einsatz einer Magnetkupplung bewährt.

Für eine Kraftübertragung zwischen dem Motorantrieb und einem Werkzeug ist es vorteilhaft, wenn ein Werkzeugantriebsmittel einen Bandriemen aufweist. Mittels des Bandriemens können Antriebskräfte von dem Motorantrieb auf das Werkzeug besonders effektiv und sicher übertragen werden, da durch die Verwendung des Bandriemens eine sehr hohe Kraftübertragung gewährleistet ist. Zusätzlich wird durch die Verwendung des Bandriemens die Gefahr verringert, dass ein umlaufendes Werkzeugantriebsmittel von einer Antriebsscheibe, wie etwa eine Riemenscheibe, unbeabsichtigt abspringt. Somit eignet sich der Einsatz eines Bandriemens für eine Kraftübertragung wesentlich besser als beispielsweise drei Einzelriemen, die einzeln auf entsprechenden Riemenscheiben angeordnet sind. Dies gilt im Besonderen bei dem vorliegenden Bodenbereichbearbeitungsgerät, bei welchem sehr hohe Antriebskräfte auf ein Werkzeug übertragen werden, insbesondere beim Fräsen eines Baumstubbens.

Wie eingangs schon erwähnt, ist es vorteilhaft, wenn ein Bediener hinter einer Fahrwerksachse und zwischen zwei Rädern der Fahrwerksachse positioniert ist. Diese vorteilhafte Position kann von einem Bediener leicht eingenommen werden, wenn das handgeführte Bodenbereichbearbeitungsgerät eine Bedieneinrichtung aufweist, welche hinter einer Fahrwerksachse und zwischen zwei Rädern der Fahrwerksachse positioniert ist. Es versteht sich, dass es in extremen Bearbeitungssituationen erforderlich sein kann, dass die Bedieneinrichtung kurzweilig bis über ein Rad der Fahrwerksachse derart hinaus geschwenkt wird, dass die Bedieneinrichtung zeitweise auch außerhalb des Bereiches zwischen den beiden Rädern geschwenkt ist. Dies ist jedoch nicht der normale Betriebszustand des vorliegenden handgeführten Bodenbereichbearbeitungsgerätes.

Weitere Vorteile, Ziele und Eigenschaften vorliegender Erfindung werden anhand der Beschreibung anliegender Zeichnung erläutert, in welcher beispielhaft Baumwurzelfräsen dargestellt sind.

Es zeigt
- Figur 1: schematisch eine Seitenansicht einer handgeführten Baumwurzelfräse mit einem Kugeldrehkranz zwischen dem Fahrgestell und dem Maschinengestell der handgeführten Baumwurzelfräse,
- Figur 2: schematisch eine Aufsicht auf die handgeführte Baumwurzelfräse aus der Figur 1,
- Figur 3: schematisch eine Seitenansicht der handgeführten Baumwurzelfräse mit jeweils einem Hydraulikmotor pro Rad,
- Figur 4: schematisch eine Aufsicht auf die handgeführte Baumwurzelfräse aus der Figur 3,
- Figur 5: schematisch eine Ansicht einer besonders gut ergonomisch gestalteten Bedieneinrichtung der handgeführten Baumwurzelfräse und
- Figur 6: schematisch eine Seitenansicht der handgeführten Baumwurzelfräse mit einer Wälzkörperlagerung im Bereich einer Dreheinrichtung zwischen einem Fahrgestell und einer Werkzeugaufnahme.

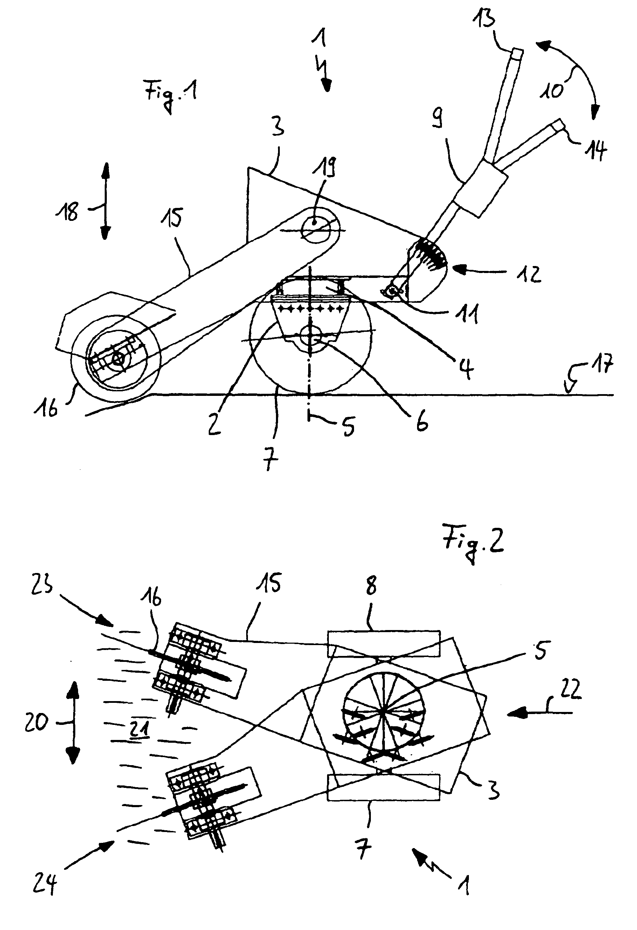

Die in den Figuren 1 und 2 dargestellte handgeführte Baumwurzelfräse 1 besteht im Wesentlichen aus einem Fahrgestell 2 und einem Maschinengestell 3. Das Fahrgestell 2 stellt im Wesentlichen das Fahrwerk und das Maschinengestell 3 stellt im Wesentlichen das Chassis der Baumwurzelfräse 1 dar. Das Fahrgestell 2 und das Maschinengestell 3 sind über einen Kugeldrehkranz 4 als Dreheinrichtung derart miteinander verbunden, dass das Maschinengestell 3 an und gegenüber dem Fahrgestell 2 um eine vertikale Mitteldrehachse 5 drehbar gelagert ist. Das Fahrgestell 2 verfügt in dem vorliegenden Ausfühnmgsbeispiel über eine Radachse 6, welche ein linkes Rad 7 und ein rechtes Rad 8 aufnimmt. An dem Maschinengestell 3 ist eine Bedieneinrichtung 9 angeordnet, mit welcher zum einen die handgeführte Baumwurzelfräse 1 geführt und zum anderen die Funktionen der Baumwurzelfräse 1 bedient werden. Die Bedieneinrichtung 9 ist gemäß der Pfeilrichtungen 10 um einen Lagerpunkt 11 schwenkbar an dem Maschinengestell 3 gelagert, sodass zum einen die Bedieneinrichtung 9 auf unterschiedlich große Bedienpersonen einstellbar ist und zum anderen vertikale Relativbewegungen der Baumwurzelfräse ausgleichbar sind, sodass die vertikalen Relativbewegungen möglichst nicht auf die Bedienperson übertragen werden. Gegebenenfalls wird die Bedieneinrichtung 9 über Rastmittel 12 gegenüber dem Maschinengestell 3 in einer bestimmten Position fixiert. Die Bedieneinrichtung 9 verfügt über einen linken Handgriff 13 und einen rechten Handgriff 14, worüber die Bedienperson die handgeführte Baumwurzelfräse 1 greift und führt.

An dem Maschinengestell 3 ist des Weiteren eine Werkzeugaufnahme 15 angeordnet, die zur Aufnahme eines Fräswerkzeuges 16 dient. Damit das Fräswerkzeug 16 gegenüber einem Untergrund 17 eine in etwa vertikale Arbeitsbewegung 18 ausführen kann, ist die Werkzeugaufnahme 15 an dem Maschinengestell 3 in einer Werkzeugaufnahmeachse 19 drehbar gelagert.

Damit das Fräswerkzeug 16 nicht nur in einer vertikalen Arbeitsrichtung 18 hin und her bewegt werden kann, sondern auch in einer in etwa horizontalen Arbeitsrichtung 20, ist das Maschinengestell 3 vorteilhafter Weise um die vertikale Mitteldrehachse 5 des Fahrgestells 2 drehbar gelagert. Hierdurch ist es möglich, bei einem gegenüber dem Untergrund 17 fixierten Fahrgestell 2 einen möglichst großen Arbeitsbereich 21 durch einfaches Schwenken des Maschinengestells 3 mittels der Bedieneinrichtung 9 um die vertikale Mitteldrehachse 5 zu erreichen. Gegebenenfalls kann hierbei die handgeführte Baumwurzelfräse 1 zusätzlich in Bearbeitungsrichtung 22 bewegt werden, sodass der Arbeitsbereich 21 besonders einfach erweiterbar ist.

Um die Drehung des Maschinengestells 3 um die Mitteldrehachse 5 des Fahrwerkes 2 optisch besser zu illustrieren, ist das Maschinengestell 3 in der Figur 2 zum einen in einer nach rechts geschwenkten Position 23 und zum anderen in einer nach links geschwenkten Position 24 dargestellt.

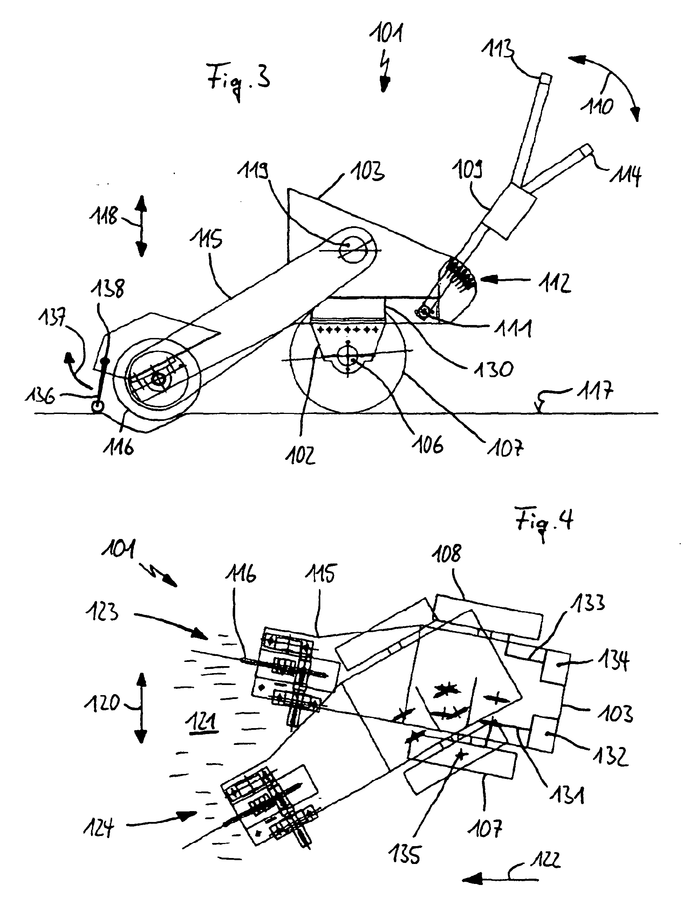

Die in den Figuren 3 und 4 dargestellte handgeführte Baumwurzelfräse 101 weist ein Fahrgestell 102 und ein Maschinengestell 103 auf, die über einen Flansch 130 starr miteinander verbunden sind. An dem Maschinengestell 103 ist eine Bedieneinrichtung 109 um eine Drehachse 111 gemäß den Pfeilrichtungen 110 drehbar gelagert. Die Bedieneinrichtung 109 kann mittels Rastmitteln 112 gegenüber dem Maschinengestell 103 festgelegt werden. Geführt und Bedient wird die handgeführte Baumwurzelfräse 101 über Handgriffe 113 und 114. An dem Maschinengestell 103 ist eine Werkzeugaufnahme 115 mit einem Fräswerkzeug 116 angeordnet. Damit das Fräswerkzeug 116 in einer in etwa vertikalen Arbeitsrichtung 118 hin und her bewegt werden kann, ist die Werkzeugaufnahme 115 mittels einer Werkzeugaufnahmeachse 119 drehbar an dem Maschinengestell 103 gelagert, sodass das Fräswerkzeug 116 gegenüber einem Untergrund 117 gemäß der vertikalen Bearbeitungsrichtung 118 bewegt werden kann.

Das Fahrgestell 102 besteht im Wesentlichen aus einer Radachse 106, welche ein linkes Rad 107 und ein rechtes Rad 108 trägt. Das linke Rad 107 wird in diesem Ausführungsbeispiel über eine Hydraulikleitung 131 mittels eines ersten Hydraulikmotors 132 angesteuert. Das rechte Rad 108 wird über eine Hydraulikleitung 133 mittels eines zweiten Hydraulikmotors 134 angetrieben. Damit die handgeführte Bauwurzelfräse 101 bzw. das Fräswerkzeug 116 in einer in etwa horizontalen Ebene, die vorliegend der Blattebene entspricht, gemäß der horizontalen Bearbeitungsrichtung 120 geschwenkt werden kann, wird das linke Rad 107 mittels des ersten Hydraulikmotors 132 blockiert und das rechte Rad 108 mittels des zweiten Hydraulikmotors 134 angetrieben, sodass sich die gesamte handgeführte Baumwurzelfräse 101 um eine in etwa vertikal verlaufende Drehachse 135 aus einer ersten Bearbeitungsposition 123 in eine zweite Bearbeitungsposition 124 dreht. Hierdurch ist der Arbeitsbereich 121 der handgeführten Baumwurzelfräse 101 vorteilhaft vergrößert.

Soll die handgeführte Baumwurzelfräse 101 aus der Arbeitsposition 124 wieder in Richtung der Arbeitsposition 123 geschwenkt werden, wird mittels des zweiten Hydraulikmotors 134 entweder die Drehrichtung des rechten Rades 108 umgekehrt oder das rechte Rad 108 wird mittels des zweiten Hydraulikmotors 134 blockiert und das linke Rad 107 wird mittels des ersten Hydraulikmotors 132 derart angetrieben, dass sich zum einen die handgeführte Baumwurzelfräse 101 nicht nur aus der zweiten Arbeitsposition 124 die erste Arbeitsposition 123 bewegt, sondern darüber hinaus noch eine Bewegung in die Arbeitsrichtung 122 vollzieht.

Es versteht sich, dass die einzelnen Räder 107 und 108 nicht nur über die Hydraulikmotoren 132 und 134 festgestellt, sondern auch mittels hier nicht explizit dargestellter Bremsmittel blockiert werden können. Es versteht sich, dass ein besonders einfaches Ausführungsbeispiel auch ohne die Hydraulikmotoren 132 und 134 zum Antreiben der Räder 107 und 108 auskommen kann, wenn die handgeführte Baumwurzelfräse 101 lediglich durch Muskelkraft bewegt wird. In einer derartigen Ausführungsvariante wird dann lediglich ein Rad blockiert und die handgeführte Baumwurzelfräse um eine in etwa vertikale Drehachse des blockierten Rades mit Muskelkraft gedreht.

Die handgeführte Baumwurzelfräse 101 weist darüber hinaus im Bereich des Fräswerkzeuges 116 an der Werkzeugaufnahme 115 ein Hilfsrad 136 auf, welches zur zusätzlichen Stabilisierung der handgeführten Baumwurzelfräse 101 dient. Insbesondere im Fahrbetrieb stützt das Hilfsrad 136 die handgeführte Baumwurzelfräse 101 im Bereich der Werkzeugaufnahme 115 vorteilhaft gegenüber dem Untergrund 117 ab. Somit weist die handgeführte Baumwurzelfräse 101 insgesamt drei Räder auf, mit welchen sie auf dem Untergrund 117 bewegt wird. Während des Fräsens mit der handgeführten Bauwurzelfräse 101 wird das Hilfsrad 136 gemäß Pfeilrichtung 137 um die Schwenkachse 138 nach oben, also vom Untergrund 117 weg, geschwenkt, sodass das Hilfsrad 136 während des Fräsens aus dem Arbeitsbereich weggeschwenkt ist und nicht stört.

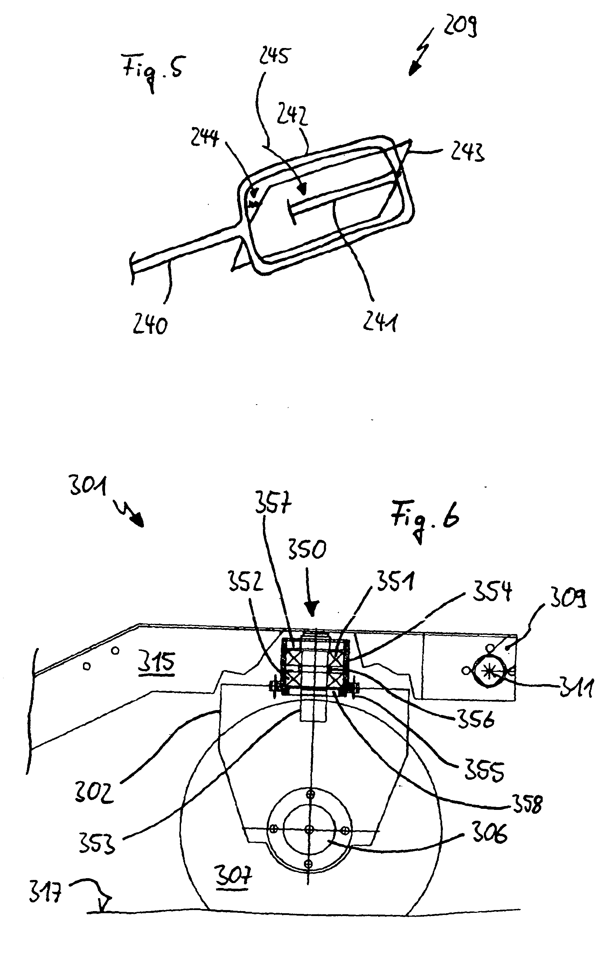

Die in der Figur 5 gezeigte Bedieneinrichtung 209 hat zwei Befestigungsstangen 240 und 241, worüber der im Wesentlichen oval ausgebildete Handgriff 242 der Bedieneinrichtung 209 an einem Maschinengestell einer handgeführten Baumwurzelfräse (hier nicht näher dargestellt) befestigt ist. Im Bereich des oval ausgebildeten Handgriffes 242 ist eine Betriebs-Wippe 243 vorgesehen, die drehbar an dem oval ausgebildeten Handgriff 242 befestigt ist. Zwischen dem Handgriff 242 und der Betriebs-Wippe 243 ist eine Stellfeder 244 angeordnet, welche die Betriebs-Wippe 243 gemäß Pfeilrichtung 245 von dem Handgriff 242 wegdrückt. In dieser "weggedrückten" Stellung ist die Betriebsfunktion eines Antriebsmotors der handgeführten Bauwurzelfräse unterbrochen. Erst wenn die Betriebs-Wippe gepackt und durch Handkraft entgegen der Pfeilrichtung 245 gegenüber dem Handgriff 242 gedreht wird, ist der Antriebsmotor der handgeführten Bauwurzelfräse betriebsbereit. Das Einschalten bzw. das Ausschalten der Betriebsfunktion geschieht beispielsweise durch das Herstellen eines entsprechenden Zündkontaktes. Durch die im Wesentlichen ovale Formgebung des Handgriffes 242 und die ebenfalls im Wesentlichen ovale Ausgestaltung der Betriebs-Wippe 243 ist ein Einhandbetrieb der handgeführten Bauwurzelfräse problemlos möglich, da die Schwenkbewegung eines Fräswerkzeuges der handgeführten Bauwurzelfräse von einer Bedienperson mittels nur einer Hand vorgenommen werden kann. Durch den ergonomisch geformten und damit einfach zu packenden Handgriff 242 und der dazugehörigen Betriebs-Wippe 243 ist ein einhändiges Arbeiten mit der handgeführten Baumwurzelfräse möglich.

Insbesondere mit der vorliegenden Bedieneinrichtung 209 ist eine im Sinn der Erfindung gestaltete handgeführte Baumwurzelfräse in baulich einfacher Art und Weise zu einer "Einhandbedienmaschine" gestaltet. Hierdurch ist das Arbeiten, insbesondere das Fräsen eines Baumstubbens, mit einer eine derartige Bedieneinrichtung 209 aufweisenden handgeführten Baumwurzelfräse wesentlich erleichtert.

Die in der Figur 6 gezeigte Baumwurzelfräse 301 weist ein Fahrgestell 302 auf, an welchem Räder 307 (hier nur exemplarisch dargestellt und beziffert) mittels einer Radachse 306 angeordnet sind.

Die handgeführte Baumwurzelfräse 301 verfügt über eine Werkzeugaufnahme 315, an welcher ein Fräswerkzeug (hier nicht explizit dargestellt) gehalten und geführt ist. An der Werkzeugaufnahme 315 ist in einem Lagerpunkt 311 eine Bedieneinrichtung 309 schwenkbar gelagert.

Zwischen dem Fahrgestell 302 und der Werkzeugaufnahme 315 ist eine Dreheinrichtung 350 angeordnet, die ein erstes Wälzlager 351 und zweites Wälzlager 352 aufweist. Mittels der beiden Wälzlager 351 und 352 ist ein Wellenzapfen 353 der Werkzeugaufnahme 315 an einer Wellenzapfenaufnahme 354 des Fahrgestells 302 drehbar gelagert. Die Wellenzapfenaufnahme 354 ist hierbei mittels Schraubverbindungen 355 (hier nur exemplarisch beziffert) an dem Fahrgestell 302 befestigt.

Die beiden Wälzlager 351 und 352 sind durch einen Distanzring 356 in der Wellenzapfenaufnahme 354 angeordnet.

Um die Wälzlager 351 und 352 vor Verunreinigungen besonders gut zu schützen, ist die Wellenzapfenaufnahme 354 im oberen Bereich durch einen ersten Deckel 357 und im unteren Bereich durch einen zweiten Deckel 358 von der Umgebung abgekapselt. Hierdurch wird die Lebensdauer der Dreheinrichtung 350 wesentlich erhöht.

Insgesamt bewegt sich die Baumwurzelfräse 301 auf einem Untergrund 317.

## Patentansprüche

1. Handgeführtes Bodenbereichbearbeitungsgerät mit wenigstens einem Motorantrieb und einem an einem Fahrwerk angeordneten Chassis, ***gekennzeichnet durch*** eine Dreheinrichtung, mit welcher das Chassis fest aber drehbar an dem Fahrwerk angeordnet ist, wobei das Chassis und das Fahrwerk drehbar um eine in etwa vertikal angeordnete Drehachse miteinander verbunden sind, und eine Bedieneinrichtung (9) zum Führen und Bedienen des handgeführten Bodenbereichbearbeitungsgerätes, wobei die Bedieneinrichtung (9) am Chassis des handgeführten Bodenbereichbearbeitungsgerätes angeordnet ist.

2. Handgeführtes Bodenbereichbearbeitungsgerät nach Anspruch 1, ***gekennzeichnet durch*** eine Stubbenfräse (1).

3. Handgeführtes Bodenbereichbearbeitungsgerät nach Anspruch 1 oder 2, ***dadurch gekennzeichnet, dass*** die Dreheinrichtung (350) einen Kugeldrehkranz (4) aufweist.

4. Handgeführtes Bodenbereichbearbeitungsgerät nach einem der Ansprüche 1 bis 3, ***dadurch gekennzeichnet, dass*** die Dreheinrichtung (350) Mittel zum Festlegen der Drehfunktion aufweist.

5. Handgeführtes Bodenbereichbearbeitungsgerät nach einem der Ansprüche 1 bis 4, ***gekennzeichnet durch*** Koordinationsmittel, welche Festlegmittel für die Dreheinrichtung (350), vorzugsweise automatisch, deaktivieren und welche eine Fahrfunktion des Fahrwerks, vorzugsweise automatisch, aktivieren, oder umgekehrt.

6. Handgeführtes Bodenbereichbearbeitungsgerät nach einem der Ansprüche 1 bis 5, mit wenigstens einem Motorantrieb und mit einem an einem Fahrwerk fest angeordneten Chassis, bei welchem das Fahrwerk wenigsten zwei Räder aufweist, ***gekennzeichnet durch*** eine Antriebseinrichtung mit ersten Antriebsmitteln zum Antreiben eines ersten Rades und mit zweiten Antriebsmitteln zum Antreiben eines zweiten Rades.

7. Handgeführtes Bodenbereichbearbeitungsgerät nach Anspruch 6, ***gekennzeichnet durch*** eine Stubbenfräse (1).

8. Handgeführtes Bodenbereichbearbeitungsgerät nach einem der Ansprüche 1 bis 7, ***gekennzeichnet durch*** eine Feststelleinrichtung mit ersten Feststellmitteln zum Feststellen eines ersten Rades (7) und mit zweiten Feststellmitteln zum Feststellen eines zweiten Rades (8).

9. Handgeführtes Bodenbereichbearbeitungsgerät nach einem der Ansprüche 1 bis 8, ***gekennzeichnet durch*** Schaltmittel zum Aktivieren und/oder Deaktivieren von Antriebsmitteln und Feststellmitteln.

10. Handgeführtes Bodenbereichbearbeitungsgerät nach einem der Ansprüche 1 bis 9, ***dadurch gekennzeichnet, dass*** an einer Werkzeugaufnahme (15) des handgeführten Bodenbereichbearbeitungsgeräts, vorzugsweise im Bereich eines Werkzeugs (16), ein Hilfsrad (136) angeordnet ist.

11. Handgeführtes Bodenbereichbearbeitungsgerät nach einem der Ansprüche 1 bis 10, ***gekennzeichnet durch*** eine Bedieneinrichtung (9), welche hinter einer Fahrwerksachse (6) und zwischen zwei Rädern (7, 8) der Fahrwerksachse (6) positioniert ist.

12. Verfahren zum Bearbeiten eines Bodenbereichs mit einem handgeführten Bodenbereichbearbeitungsgerät nach einem der Ansprüche 1-11, bei welchem an einem Werkzeug auftretende Bearbeitungskräfte und an der Bedieneinrichtung zum Führen und Bedienen des Bodenbereichbearbeitungsgerätes auftretende Lenkkräfte mittels einer gemeinsamen fixierbaren Dreheinrichtung von einer Werkzeugaufnahme oder einem Chassis des handgeführten Bodenbereichbearbeitungsgerätes auf ein Fahrwerk des handgeführten Bodenbereichbearbeitungsgerätes übertragen werden.

## Claims

1. A hand-guided soil working apparatus with at least one motor drive and one chassis disposed on a frame, ***characterized by*** a rotation device by means of which said chassis is disposed fixedly but rotatably to said frame, said chassis and said frame being connected together for rotation about an axis of rotation disposed approximately vertically, and by an operating device (9) for guiding and operating said hand-guided soil working apparatus, said operating device (9) being disposed on the chassis of the hand-guided soil working apparatus.

2. The hand-guided soil working apparatus as set forth in claim 1, ***characterized by*** a stump cutter (1).

3. The hand-guided soil working apparatus as set forth in claim 1 or 2, ***characterized in that*** the rotation device (350) comprises a live ring (4) supported on balls.

4. The hand-guided soil working apparatus as set forth in any one of the claims 1 through 3, ***characterized in that*** the rotation device (350) comprises means for immobilizing the rotating function.

5. The hand-guided soil working apparatus as set forth in any one of the claims 1 through 4, ***characterized by*** coordinating means that deactivate, preferably automatically, means for immobilizing the rotation device (350) and that activate, preferably automatically, a travelling function of the chassis frame or vice versa.

6. The hand-guided soil working apparatus as set forth in any one of the claims 1 through 5, with at least one motor drive and with a chassis fixedly disposed on a frame, said chassis frame having at least two wheels, ***characterized by*** a driving device with first driving means for driving a first wheel and with second driving means for driving a second wheel.

7. The hand-guided soil working apparatus as set forth in claim 6, ***characterized by*** a stump cutter (1).

8. The hand-guided soil working apparatus as set forth in any one of the claims 1 through 7, ***characterized by*** a fixing device with first fixing means for fixing a first wheel (7) and with second fixing means for fixing a second wheel (8).

9. The hand-guided soil working apparatus as set forth in any one of the claims 1 through 8, ***characterized by*** switching means for activating and/or deactivating driving means and fixing means.

10. The hand-guided soil working apparatus as set forth in any one of the claims 1 through 9, ***characterized in that*** an auxiliary wheel (136) is disposed on a tool holder (15) of the hand-guided soil working apparatus, preferably in the region of a tool (16).

11. The hand-guided soil working apparatus as set forth in any one of the claims 1 through 10, ***characterized by*** an operating device (9) that is positioned behind a frame axis (6) and between two wheels (7, 8) of said frame axis (6).

12. A method of working a soil with a hand-guided soil working apparatus as set forth in any one of the claims 1 through 11, by which machining forces occurring on a tool and steering forces occurring at the operating device for guiding and operating said soil working apparatus are transmitted by means of a common fixable rotation device from a tool holder or a chassis of the hand-guided soil working apparatus to a chassis frame of the hand-guided soil working apparatus.

## Revendications

1. Appareil pour le travail du sol à pilotage manuel avec au moins un entraînement motorisé et un châssis disposé sur un train de roulement, ***caractérisé par*** un mécanisme de rotation par lequel le châssis est monté fixe, mais mobile en rotation sur le train de roulement, le châssis et le train de roulement étant reliés, mobiles en rotation, autour d'un axe de rotation disposé à peu près verticalement, et par un dispositif de manoeuvre (9) pour guider et manoeuvrer l'appareil pour le travail du sol à pilotage manuel, ce dispositif de manoeuvre (9) étant disposé sur le châssis de l'appareil pour le travail du sol à pilotage manuel.

2. Appareil pour le travail du sol à pilotage manuel selon la revendication 1, ***caractérisé par*** une dessoucheuse (1).

3. Appareil pour le travail du sol à pilotage manuel selon la revendication 1 ou 2, ***caractérisé en ce que*** le mécanisme de rotation (350) comporte une couronne d'orientation montée sur des billes (4).

4. Appareil pour le travail du sol à pilotage manuel selon l'une quelconque des revendications 1 à 3, ***caractérisé en ce que*** le mécanisme de rotation (350) comporte des moyens d'immobilisation de la fonction de rotation.

5. Appareil pour le travail du sol à pilotage manuel selon l'une quelconque des revendications 1 à 4, ***caractérisé par*** des moyens de coordination qui désactivent, de préférence automatiquement, des moyens d'immobilisation du mécanisme de rotation (350) et qui activent, de préférence automatiquement, une fonction de roulement du train de roulement ou inversement.

6. Appareil pour le travail du sol à pilotage manuel selon l'une quelconque des revendications 1 à 5, avec au moins un entraînement motorisé et un châssis disposé de façon fixe sur un train de roulement, ce train de roulement comportant au moins deux roues, ***caractérisé par*** un mécanisme d'entraînement avec des premiers moyens d'entraînement destinés à entraîner une première roue et des deuxièmes moyens d'entraînement destinés à entraîner une deuxième roue.

7. Appareil pour le travail du sol à pilotage manuel selon la revendication 6, ***caractérisé par*** une dessoucheuse (1).

8. Appareil pour le travail du sol à pilotage manuel selon l'une quelconque des revendications 1 à 7, ***caractérisé par*** un mécanisme de fixation avec des premiers moyens de fixation destinés à fixer une première roue (7) et des deuxièmes moyens de fixation destinés à fixer une deuxième roue (8).

9. Appareil pour le travail du sol à pilotage manuel selon l'une quelconque des revendications 1 à 8, ***caractérisé par*** des moyens de commutation destinés à activer et/ou à désactiver des moyens d'entraînement et des moyens de fixation.

10. Appareil pour le travail du sol à pilotage manuel selon l'une quelconque des revendications 1 à 9, ***caractérisé en ce qu*'**une roue auxiliaire (136) est disposée sur un porte-outil (15) de l'appareil pour le travail du sol à pilotage manuel, de préférence dans la région d'un outil (16).

11. Appareil pour le travail du sol à pilotage manuel selon l'une quelconque des revendications 1 à 10, ***caractérisé par*** un dispositif de manoeuvre (9) qui est positionné derrière un axe (6) du train de roulement et entre deux roues (7, 8) de l'axe (6) du train de roulement.

12. Procédé de travail du sol avec un appareil pour le travail du sol à pilotage manuel selon l'une quelconque des revendications 1 à 11, dans lequel des efforts de travail apparaissant sur un outil et des efforts de direction apparaissant sur le dispositif de manoeuvre pour guider et manoeuvrer l'appareil pour le travail du sol sont transmis d'un porte-outil ou d'un châssis de l'appareil pour le travail du sol à pilotage manuel sur un train de roulement de l'appareil pour le travail du sol à pilotage manuel au moyen d'un mécanisme de rotation commun apte à être fixé.
